# EUROPÄISCHE PATENTSCHRIFT

(11) **EP 1 301 103 B1**
(45) Veröffentlichungstag und Bekanntmachung des Hinweises auf die Patenterteilung: **06.09.2006**
(21) Anmeldenummer: 01937915.5
(22) Anmeldetag: 15.06.2001
(51) Int. Cl.: A46B 9/02

(54) **BEHANDLUNGSTEIL FÜR EINEN APPARAT ZUR REINIGUNG VON ZAHNZWISCHENRÄUMEN, VERFAHREN UND VORRICHTUNG ZU DESSEN HERSTELLUNG**
TREATMENT ELEMENT FOR AN APPLIANCE FOR CLEANING DENTAL INTERSTICES, A METHOD AND DEVICE FOR THE PRODUCTION THEREOF
ELEMENT DE TRAITEMENT DESTINE A UN APPAREIL POUR LE NETTOYAGE DES INTERSTICES ENTRE LES DENTS, AINSI QUE PROCEDE ET DISPOSITIF POUR SA PRODUCTION

(30) Priorität: 20.07.2000 CH 143600
(43) Veröffentlichungstag der Anmeldung: 16.04.2003
(73) Patentinhaber: Esro AG, 8800 Thalwil (CH)
(72) Erfinder: BRÄNDLI, Paul, CH-8800 Thalwil (CH)
(74) Vertreter: Liebetanz, Michael
(86) Internationale Anmeldenummer: PCT/CH2001/000374
(87) Internationale Veröffentlichungsnummer: WO 2002/007562

(56) Entgegenhaltungen:
- DE-U- 9 014 650
- US-A- 4 898 193
- US-A- 5 020 551
- US-A- 5 595 198
- US-A- 5 918 994

## Beschreibung

Die Erfindung betrifft eine Vorrichtung zur Herstellung eines Bürstenkopfes, insbesondere für einen Apparat zur Reinigung von Zahnzwischenräumen, aus einem Rohling, der über radial von einem Schaft abstehende Borsten von im wesentlichen gleicher Länge verfügt.

Eine solche Vorrichtung ist aus der US 5,020,551 bekannt, insbesondere um die Spitzen der Bürstenköpfe besonders auszugestalten, dass sie für Schminkzwecke gut geeignet sind.

Aus der US 4,898,193 sind eine Vielzahl von Bürstenköpfen bekannt, darunter auch welche, die im Querschnitt dreieckig sind. Herstellungsverfahren und Vorrichtungen zu deren Herstellung werden nicht genannt.

Ein weiterer Bürstenkopf, hier für einen Apparat zur Reinigung von Zahnzwischenräumen, ist in der CH-688.261 beschrieben. Dieser wird aus einem Gehäuse, einem Stiel und einem Kopf gebildet, der einen Halter zur Aufnahme von Bürstenköpfen trägt. Die Zahnreinigung erfolgt dann durch eine Bewegung des Bürstenkopfes, welche über einen elektromotorischen Antrieb im Gehäuse und über eine im Stiel verlaufende Exzenterwelle übertragen wird. Ein bekannter Bürstenkopf ist beispielsweise in den Figuren der CH-688.261 dargestellt und weist in Richtung seiner Längsachse eine konische Form auf. Die konische Form ist gut geeignet, um in Zahnzwischenräume eingeführt zu werden, da der wirksame Kreisdurchmesser des Behandlungsteils bei steigender Einführung grösser wird.

Aufgabe der vorliegenden Erfindung ist es, eine Vorrichtung anzugeben, mit der in effizienter Weise Bürstenkopfe herstellbar sind, die eine im Querschnitt im wesentlichen mehreckige Form aufweisen.

Diese Aufgabe wird für eine Vorrichtung erfindungsgemäss mit den Merkmalen des Kennzeichens des Anspruchs 1 gelöst.

Damit sind dann Bürstenköpfe mit einer im Querschnitt im wesentlichen mehreckigen, insbesondere dreieckigen, Form herstellbar. Dabei bedeutet der Begriff "dreieckige Form", dass die Enden der Borsten, die auf einem zentralen Schaft befestigt sind, in der besagten Querschnittsansicht ein Dreieck bilden und nicht lediglich, dass in drei Richtungen im Abstand von 120° Borsten von dem zentralen Schaft abstehen.

Weitere vorteilhafte Ausgestaltungen sind in den Unteransprüchen beschrieben.

Die Erfindung wird nun im grösseren Detail anhand den beigefügten Zeichnungen dargestellt. Es zeigen:
- Fig. 1: einen schematischer Querschnitt durch ein Behandlungsteil oder Bürstenkopf gemäss der Erfindung,
- Fig. 2: eine schematische Darstellung eines zweiten Ausführungsbeispiels eines Behandlungsteils mit einem in seinem Durchmesser anwachsenden Bürstenkopf,
- Fig. 3: einen schematischer Querschnitt durch ein Behandlungsteil oder Bürstenkopf gemäss einem dritten Ausführungsbeispiel der Erfindung,
- Fig. 4: eine schematische und in den Krümmungen übertriebene Darstellung eines Behandlungsteiles nach einem vierten Ausführungsbeispiel,
- Fig. 5: eine schematische perspektivische Ansicht eines weiteren Bürstenkopfes gemäss der Erfindung, und
- Fig. 6: eine Abfolge von Querschnittsansichten und Seitenansichten von verschiedenen weiteren Ausführungsbeispielen von Behandlungsteilen mit im Durchmesser veränderlichen Bürstenkopf.

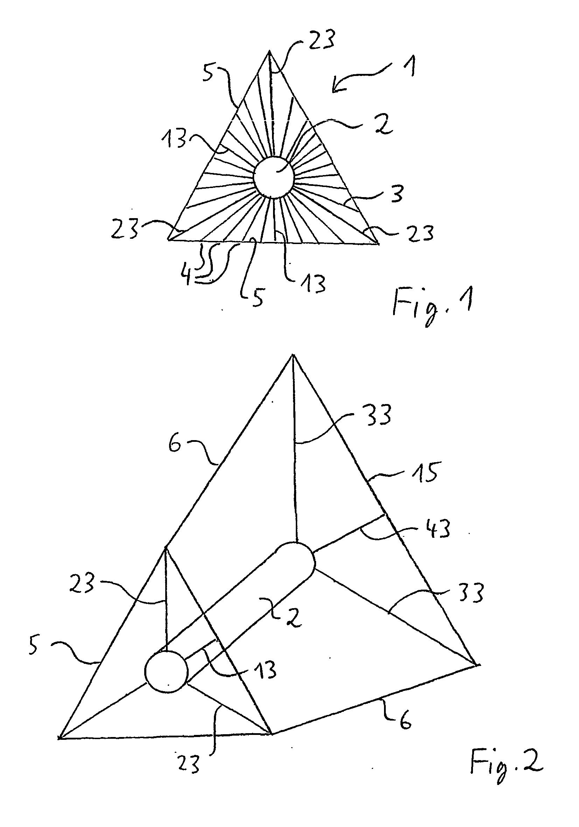

Die Fig. 1 zeigt ein Behandlungsteil oder Bürstenkopf 1 mit einem zentralen Schaft 2, auf dem eine Vielzahl von Borsten 3 befestigt sind. Von diesen sind zur Übersichtlichkeit nur einige wenige dargestellt. Benachbarte Borsten 3 verlaufen von dem Schaft 2 ausgehend leicht divergierend und weisen ausgehend von den mit dem Bezugszeichen 13 versehenen kürzesten Borsten jeweils grössere Längen auf, bis sie an den Borsten 23, die in einem Winkel von 120° zueinander stehen, den grössten Abstand voneinander aufweisen. Das Material, aus welchem die Borsten bestehen, kann aus der Gruppe aller entsprechend für Zahnbürsten, Zahnstocher und sonstigen Reinigungsmaterialien eingesetzten Produkten gewählt werden.

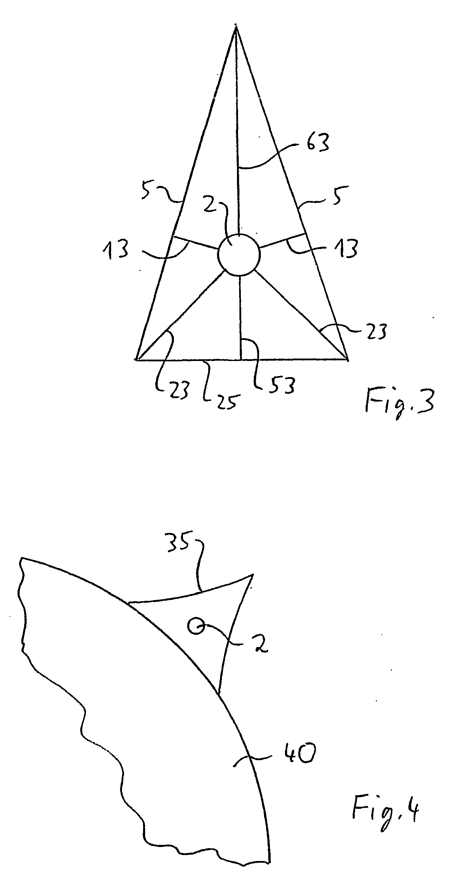

Die Borstenspitzen 4 bilden eine Ebene oder im Querschnitt der Fig. 1 eine Aussenkontur 5 des Behandlungsteiles 1, die in erster Annäherung geradlinig ist. Damit bildet sich für die Aussenkontur des Behandlungsteiles 1 nach Fig. 1 ein gleichseitiges Dreieck aus. Bei einem bevorzugten Herstellungsverfahren ist die Aussenkontur 5 in genauerer Darstellung eine jeweils leicht konkave Kurve, die in den Ecken des Dreiecks an den längsten Borsten endet. Dies ist in der Fig. 4 zu erkennen.

Die Fig. 2 zeigt eine Borstenausgestaltung mit längs des Schaftes 2 längerwerdenden Borsten, was nichts anderes bedeutet, dass das durch die Borsten im Querschnitt aufgespannte Dreieck 5 sich zu einem Dreieck 15 mit längeren Schenkeln aufweitet. Die Aufweitung ist dabei in Richtung der Befestigung des Behandlungsteiles an dem Bürstenkopf vorgegeben, um eine sich verjüngende Spitze des Behandlungsteiles zu bilden, die einfacher in Zahnzwischenräume einführbar ist. Die Dreiecke 5 und 15 sind im vorliegenden Ausführungsbeispiel gleichseitig. Die Verbindungslinie zwischen den jeweils längsten Borsten 23, 33 ist mit dem Bezugszeichen 6 gekennzeichnet. Es ist auch möglich, dass die Kurve 6 keine Gerade ist sondern gebogen verläuft und/oder dass die Kurve 6 nach einem Maximum mit längsten Borsten 33 wieder zu kürzeren längsten Borsten 23 übergeht. Auch die kürzesten Borsten 13 verlängern sich zu Borsten 43.

Die Fig. 3 zeigt ein drittes Ausführungsbeispiel, bei dem sich durch die Kurven der Borstenspitzen ein spitzwinkliges gleichschenkliges Dreieck bildet. Dabei sind zwei Seiten 5 gleichlang und eine dritte Seite, die Basislinie, 25 kürzer. Auf zwei Seiten sind die kürzesten Borsten 13 gleich lang, auf der dritten Seite sind die kürzesten Borsten 53 gegenüber den anderen kürzesten Borsten 13 länger. Die Form des Bürstenkopfes nach Fig. 3 ist für Zahnzwischenräume besonders geeignet. Der spitze Winkel kann jedoch auch grösser oder kleiner gewählt werden und auch über einen rechten Winkel hinaus stumpf werden.

Bürstenköpfe gemäss den oben genannten Ausführungsbeispielen werden mit einer Fräse erzeugt, die vorzugsweise fest positioniert ist und bei der die Bürstenköpfe (im gleichseitigen Fall) jeweils um ihre Schäfte 2 um genau 120° rotiert werden. Durch den grossen Durchmesser des Fräswerkzeuges 40 ergeben sich die im wesentlichen geraden Seitenflächen 35 des Dreiecks. In der Fig. 4 ist in schematischer und in den Krümmungen übertriebener Darstellung diese Geraden jedoch leicht konkave Seitenflächen 35, wobei hier durch die Wahl des Fräswerkzeuges ein Ausgleich zwischen Schnelligkeit der Herstellung des Behandlungsteiles und der Qualität der Seitenflächen durch den Hersteller definiert werden muss, da in den Eckbereichen die Borsten schräg angeschnitten werden.

Es ist ebenfalls möglich, dass das Behandlungsteil anstelle von einem Dreieck eine andere Aussenkontur aufweist, wie beispielsweise ein Hexagon oder ein Achteck.

Das Verfahren zur Herstellung eines Behandlungsteiles beginnt mit einem Rohling, der über radial von einem Schaft abstehende Borsten von im wesentlichen gleicher Länge verfügt. Dieser wird in einer drehbaren Halterung fixiert. Ein Fräsbearbeitungswerkzeug ist vorgesehen, welches um eine Achse drehbar ist, die parallel zur besagten drehbaren Halterung des Rohlings verläuft. Wenn nun der Rohling in einer ersten Position fixiert ist, wird die Achse des Fräsbearbeitungswerkzeuges in einem Abstand zum Rohling angeordnet, so dass das Fräsbearbeitungswerkzeug im Querschnitt im wesentlichen eine erste gerade Fräskante erzeugt. Anschliessend wird der Rohling in der drehbaren Halterung um einen vorbestimmten Winkel in eine zweite Position gedreht, wobei das Fräsbearbeitungswerkzeug nun im Querschnitt eine zweite im wesentlichen gerade Fräskante erzeugt, so dass die beiden Fräskanten einen Winkel von 180 Grad minus dem vorbestimmten Winkel miteinander einschliessen. Dann wird der Rohling in der drehbaren Halterung um jeweils weitere vorbestimmte Winkel (beim Dreieck noch ein zweites Mal, bei einem Sechseck noch viermal) in weitere Positionen gedreht, um durch das Fräsbearbeitungswerkzeug weitere gerade Fräskante zu erzeugen, bis die letzte gerade Fräskante mit der ersten geraden Fräskante einen vorbestimmten Winkel bildet. Dann kann der fertig bearbeitete Rohling ausgeworfen werden.

Eine Vorrichtung zur Herstellung eines Behandlungsteiles verfügt demnach über eine erste Halterung zur Aufnahme eines Rohling und über ein parallel zur ersten Halterung angeordnetes Fräsbearbeitungswerkzeug. Der Rohling ist in der ersten Halterung fixierbar und indexiert um vorbestimmte Winkel drehbar. Das Fräsbearbeitungswerkzeug kann anfänglich und nach jeder Drehung durch Rotation um seine Achse im Querschnitt eine im wesentlichen gerade Schnittkante der Borstenspitzen des Rohlings erzeugen, bis das Bearbeitungsteil mit im Querschnitt aneinandergrenzenden Strekken von geraden Schnittkanten entstanden ist.

Eine andere Ausgestaltung, die in den Fig. nicht dargestellt ist, setzt zwei gesteuerte Wellen ein, eine für die Halterung der Bürste und die andere für die Bewegung des Fräsers. Insbesondere ist es möglich, eine sich drehende Fräse über einen Exzenter oder eine Kurvenscheibe in Bezug auf ihren Abstand zu einer sich drehenden Halterung für die Bürste anzusteuern, wobei die Drehung des Exzenters eine Funktion der Drehung der Fräse oder der Bürste sein kann. Natürlich kann auch die Achse der Bürste über eine Exzenterscheibe zur Achse der Fräse verstellt werden.

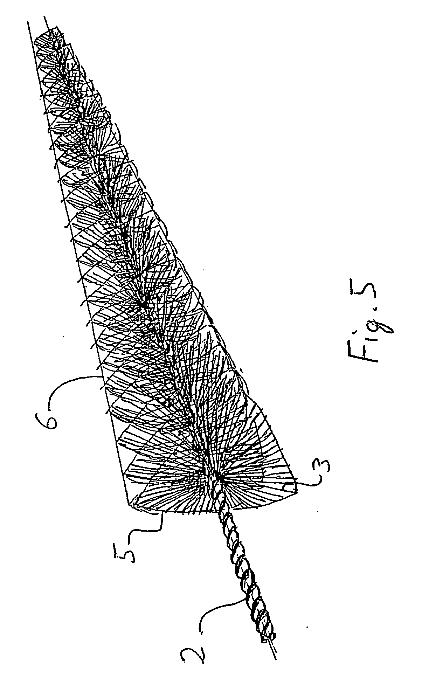

Die Fig. 5 zeigt eine schematische perspektivische Ansicht eines weiteren Bürstenkopfes. Gut zu erkennen ist der verdrillte Schaft 2, aus dem mit demselben Schraubengang die Borsten 3 radial herausstehen. Diese werden der Kurve 6 folgend entsprechend immer kürzer, um dann zugleich mit dem Schaft 2 zu enden.

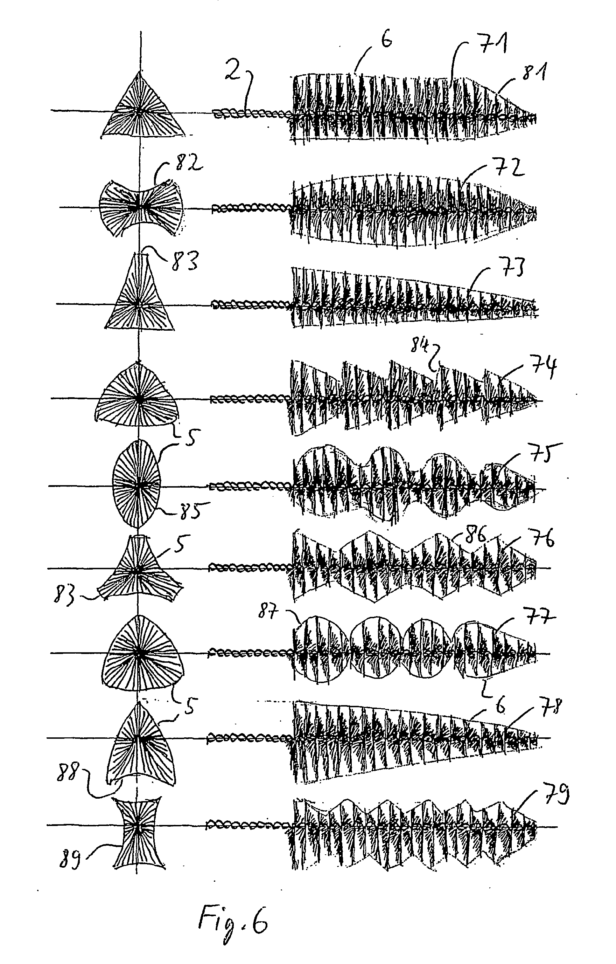

Die Fig. 6 schliesslich zeigt eine Abfolge von Querschnittsansichten und Seitenansichten von verschiedenen weiteren Ausführungsbeispielen von Behandlungsteilen mit im Durchmesser veränderlichen Bürstenkopf. Diese Bürstenköpfe sind mit den Bezugszeichen 71, 72, 73, 74, 75, 76, 77, 78 und 79 versehen.

Bürstenkopf 71 ist im Querschnitt dreieckig und in seiner Länge im Durchmesser konstant bis auf einen sich verjüngenden Endabschnitt 81. Bürstenkopf 72 wird im Querschnitt von zwei sich schneidenden Rotationsflächen gebildet und ist an zwei gegenüberliegenden Seiten konkav 82. In der Länge ist er konvex ausgestaltet.

Bürstenkopf 73 verjüngt sich zum Ende des Schaftes 2 hin, dabei ist der Querschnitt oben stumpf 83. Bürstenkopf 74 verjüngt sich zum Ende des Schaftes 2 hin in Zackenform 84, dabei ist der Querschnitt ein Dreieck mit tonnenförmigen Seitenflächen. Bürstenkopf 75 ähnelt dem Bürstenkopf 74 im Hinblick auf die Seitenansicht, da hier die Verjüngung zum Ende des Schaftes 2 hin in mehreren Stufen wellenförmig verläuft, dabei ist der Querschnitt im wesentlichen ovaloid 85.

Bürstenkopf 76 ist in Richtung des Schaftes 2 in Sägezahnkurve 86 ausgebildet, dabei ist der Querschnitt ein Dreieck mit abgestumpften Ecken 83 ähnlich zu Bürstenkopf 73. Bürstenkopf 77 ist in Richtung des Schaftes 2 in komplementären sinusoidalen Kurven 87 ausgebildet, dabei ist der Querschnitt ein Dreieck ähnlich zu Bürstenkopf 74.

Bürstenkopf 78 ist in Richtung des Schaftes 2 verjüngt wie Bürstenkopf 73 ausgebildet, dabei ist der Querschnitt aber ein Dreieck mit zwei tonnenförmigen Seiten und einer konkaven Seite 88. Bürstenkopf 79 schliesslich ist in Richtung des Schaftes 2 sägezahnförmig wie Bürstenkopf 76 ausgebildet, dabei ist der Querschnitt aber ein Rechteck 89 mit vier konkaven Seiten, wobei zudem die Schnittkante der Borsten oberhalb der dargestellten Achse kürzer ist als unterhalb der dargestellten Achse, d.h. die Borstenlängen sind unsymmetrisch.

## Patentansprüche

1. Vorrichtung zur Herstellung eines Bürstenkopfes (1), insbesondere für einen Apparat zur Reinigung von Zahnzwischenräumen, aus einem Rohling, der über radial von einem Schaft (2) abstehende Borsten (3, 13, 23, .. , 63) von im wesentlichen gleicher Länge verfügt, **dadurch gekennzeichnet, dass** die Vorrichtung über eine erste drehbare Halterung zur Aufnahme eines Rohlings und über ein parallel zur ersten Halterung angeordnetes Fräsbearbeitungswerkzeug verfügt, wobei der Rohling in der ersten Halterung fixierbar und indexiert um vorbestimmte Winkel drehbar ist und dass mit dem Fräsbearbeitungswerkzeug anfänglich und nach jeder Drehung durch Rotation um seine Achse im Querschnitt eine im wesentlichen gerade Schnittkante der Borstenspitzen des Rohlings erzeugbar ist, bis der Bürstenkopf (1) mit im Querschnitt aneinandergrenzenden Strecken von geraden Schnittkanten entstanden ist, so dass der Bürstenkopf (1) eine im Querschnitt im wesentlichen mehreckige Form aufweist.

2. Vorrichtung nach Anspruch 1, **dadurch gekennzeichnet, dass** jede Rotation 120 Grad umfasst und dass der Querschnitt des Bürstenkopfes (1) im wesentlichen ein Dreieck ist.

3. Vorrichtung nach Anspruch 1 oder 2, **dadurch gekennzeichnet, dass** das Fräsbearbeitungswerkzeug longitudinal zu dem Schaft (2) des Bürstenkopfes (1) in einer Weise verfahrbar ist, so dass die Verbindungslinie (6) der längsten Borsten (23, 33) in Längsrichtung des Schaftes (2) in unterschiedlichen radialen Abständen von diesem (2) verläuft und/oder dass die Seitenlinien (35) des Behandlungsteiles (1) im Querschnitt konkav zum Schaft (2) hin gewölbt sind.

4. Vorrichtung nach einem der Ansprüche 1 bis 3, **dadurch gekennzeichnet, dass** das Fräsbearbeitungswerkzeug longitudinal zu dem Schaft (2) des Bürstenkopfes (1) in einer Weise verfahrbar ist, so dass die Verbindungslinie (6) der längsten Borsten (23, 33) in Längsrichtung des Schaftes (2) in periodisch unterschiedlichen radialen Abständen von diesem (2) verläuft.

5. Verfahren zur Herstellung eines Bürstenkopfes mit einer Vorrichtung nach einem der Ansprüche 1 bis 4, **dadurch gekennzeichnet, dass** ein Rohling, der über radial von einem Schaft abstehende Borsten von im wesentlichen gleicher Länge verfügt, in einer drehbaren Halterung fixiert wird, dass ein Fräsbearbeitungswerkzeug vorgesehen ist, welches um eine Achse drehbar ist, die parallel zur besagten drehbaren Halterung des Rohlings verläuft, dass der Rohling in einer ersten Position fixiert wird, dass die Achse des Fräsbearbeitungswerkzeuges in einem Abstand zum Rohling angeordnet wird, so dass das Fräsbearbeitungswerkzeug im Querschnitt im wesentlichen eine erste gerade Fräskante erzeugt, dass anschliessend der Rohling in der drehbaren Halterung um einen vorbestimmten Winkel in eine zweite Position gedreht wird, dass das Fräsbearbeitungswerkzeug im Querschnitt im wesentlichen eine zweite gerade Fräskante erzeugt, so dass die beiden Fräskanten einen Winkel von 180 Grad minus dem vorbestimmten Winkel miteinander einschliessen, dass dann der Rohling in der drehbaren Halterung um jeweils weitere vorbestimmte Winkel in weitere Positionen gedreht wird, um durch das Fräsbearbeitungswerkzeug weitere gerade Fräskante zu erzeugen, bis die letzte gerade Fräskante mit der ersten geraden Fräskante einen vorbestimmten Winkel bildet, wonach der fertig bearbeitete Rohling ausgeworfen wird.

6. Bürstenkopf (1) für einen Apparat zur Reinigung von Zahnzwischenräumen hergestellt mit einer Vorrichtung nach einem der Ansprüche 1 bis 4.

## Claims

1. Device for producing a brush head (1), especially for an appliance for cleaning dental interstices, from a blank comprising a shaft (2) from which bristles (3, 13, 23, ... , 63) of essentially the same length project radially, **characterized in that** the device comprises a first rotatable mounting for accommodating a blank and has a milling tool arranged parallel to the first mounting, in which case the blank can be fixed in the first mounting and can be rotationally indexed by predetermined angles, and **in that**, with the milling tool, initially and after each rotation, by rotation about its axis, an essentially straight cut edge of the bristle tips of the blank can be produced in cross section until the brush head (1) has been produced with sections, adjacent to one another in cross section, of straight cut edges, wherein the brush head (1) has an essentially polygonal shape in cross section.

2. Device according to Claim 1, **characterized in that** each rotation comprises 120 degrees and **in that** the cross section of the brush head (1) is essentially a triangle.

3. Device according to one of Claims 1 or 2, **characterized in that** the milling tool can be moved longitudinally to the shaft (2) of the brush head (1) so that the connecting line (6) of the longest bristles (23, 33), in the longitudinal direction of the shaft (2), runs at different radial distances from the latter (2) and/or **in that** the side lines (35) of the treatment element (1), in cross section, are arched concavely towards the shaft (2).

4. Device according to one of Claims 1 to 3, **characterized in that** the milling tool can be moved longitudinally to the shaft (2) of the brush head (1) so that the connecting line (6) of the longest bristles (23, 33), in the longitudinal direction of the shaft (2), runs at periodically different radial distances from the latter (2).

5. Method of producing a brush head according to one of Claims 1 to 4, **characterized in that** a blank which has bristles of essentially the same length projecting radially from a shaft is fixed in a rotatable mounting, **in that** a milling tool is provided which is rotatable about an axis which runs parallel to the said rotatable mounting of the blank, **in that** the blank is fixed in a first position, **in that** the axis of the milling tool is arranged at a distance from the blank, so that the milling tool produces essentially a first straight milled edge in cross section, **in that** the blank is then rotated in the rotatable mounting by a predetermined angle into a second position, **in that** the milling tool produces essentially a second straight milled edge in cross section, so that the two milled edges enclose an angle of 180 degrees with one another minus the predetermined angle, **in that** the blank is then rotated in the rotatable mounting by in each case further predetermined angles into further positions in order to produce a further straight milled edge by the milling tool until the last straight milled edge forms a predetermined angle with the first straight milled edge, after which the finish-machined blank is ejected.

6. Brush head (1) for an appliance for cleaning dental interstices produced with a device according to one of Claims 1 to 4.

## Revendications

1. Dispositif pour fabriquer une tête de brosse (1), notamment pour un appareil pour nettoyer les interstices entre les dents, constitué d'une ébauche, qui dispose de brosses (3, 13, 23, ... , 63) saillant radialement depuis une tige (2), de longueur sensiblement égale, **caractérisé en ce que** le dispositif dispose d'une première fixation rotative pour recevoir une ébauche et d'un outil d'usinage par fraisage disposé parallèlement à la première fixation, l'ébauche pouvant être fixée dans la première fixation et pouvant tourner de manière indexée suivant des angles prédéterminés et **en ce que** l'on peut produire, avec l'outil d'usinage par fraisage, au début et après chaque rotation, par rotation autour de son axe, une arête de coupe sensiblement droite en section transversale des pointes des brosses de l'ébauche, jusqu'à ce que l'on obtienne la tête de brosse (1) avec des portions adjacentes en section transversale d'arêtes de coupe droites, de sorte que la tête de brosse (1) présente une forme sensiblement polygonale en section transversale.

2. Dispositif selon la revendication 1, **caractérisé en ce que** chaque rotation est effectuée sur 120 degrés et **en ce que** la section transversale de la tête de brosse (1) est sensiblement triangulaire.

3. Dispositif selon la revendication 1 ou 2,
**caractérisé en ce que** l'outil d'usinage par fraisage peut être déplacé longitudinalement par rapport à la tige (2) de la tête de brosse (1) de manière telle que la ligne de connexion (6) des brosses les plus longues (23, 33) dans la direction longitudinale de la tige (2) s'étende à des distances radiales différentes depuis celle-ci (2) et/ou **en ce que** les lignes latérales (35) de la partie de traitement (1) présentent en section transversale une courbure concave par rapport à la tige (2).

4. Dispositif selon l'une quelconque des revendications 1 à 3, **caractérisé en ce que** l'outil d'usinage par fraisage peut être déplacé longitudinalement par rapport à la tige (2) de la tête de brosse (1) de telle manière que la ligne de connexion (6) des brosses les plus longues (23, 33) dans la direction longitudinale de la tige (2) s'étende à des distances radiales périodiquement différentes depuis celle-ci (2).

5. Procédé de fabrication d'une tête de brosse avec un dispositif selon l'une quelconque des revendications 1 à 4, **caractérisé en ce qu'**une ébauche, qui dispose de brosses saillant radialement depuis une tige, de longueur sensiblement égale, est fixée dans une fixation rotative, **en ce qu'**un outil d'usinage par fraisage est prévu, lequel peut tourner autour d'un axe qui s'étend parallèlement à ladite fixation rotative de l'ébauche, **en ce que** l'ébauche est fixée dans une première position, **en ce que** l'axe de l'outil d'usinage par fraisage est disposé à distance de l'ébauche, de telle sorte que l'outil d'usinage par fraisage produise en section transversale sensiblement une première arête de fraisage droite, **en ce qu'**ensuite l'ébauche est tournée dans une deuxième position dans la fixation rotative autour d'un angle prédéterminé, **en ce que** l'outil d'usinage par fraisage produit en section transversale sensiblement une deuxième arête de fraisage droite, de sorte que les deux arêtes de fraisage forment ensemble un angle de 180 degrés moins l'angle prédéterminé, **en ce qu'**ensuite l'ébauche est tournée dans la fixation rotative d'angles prédéterminés respectifs supplémentaires dans des positions suivantes, afin de produire par l'outil d'usinage par fraisage d'autres arêtes de fraisage droites, jusqu'à ce que la dernière arête de fraisage droite forme avec la première arête de fraisage droite un angle prédéterminé, puis l'ébauche usinée finie est expulsée.

6. Tête de brosse (1) pour un appareil de nettoyage d'interstices entre les dents, fabriquée avec un dispositif selon l'une quelconque des revendications 1 à 4.
